Europäisches Patentamt

European Patent Office

Office européen des brevets

(11) Publication number: **0 138 888**
**B1**

(12) **EUROPEAN PATENT SPECIFICATION**

(45) Date of publication of patent specification: **04.05.88**

(21) Application number: **84901170.5**

(22) Date of filing: **27.02.84**

(86) International application number:
**PCT/US84/00283**

(87) International publication number:
**WO 84/03743 27.09.84 Gazette 84/23**

(51) Int. Cl.⁴: **F 16 H 1/38, F 16 H 57/02,
B 23 D 43/02**

(54) **DIFFERENTIAL APPARATUS AND METHOD OF MAKING.**

(30) Priority: **15.03.83 US 475527**

(43) Date of publication of application:
**02.05.85 Bulletin 85/18**

(45) Publication of the grant of the patent:
**04.05.88 Bulletin 88/18**

(84) Designated Contracting States:
**BE DE FR GB NL SE**

(56) References cited:
**EP-A-0 138 912
CA-A- 617 012
JP-A-85 000 089
US-A-1 090 082
US-A-1 164 770
US-A-1 196 988
US-A-1 294 040
US-A-1 373 657
US-A-2 292 440
US-A-2 431 343
US-A-2 726 435
US-A-2 859 641
US-A-2 975 682
US-A-3 735 647
US-A-3 849 862
US-A-3 875 824
US-A-3 884 096**

(73) Proprietor: **THE GLEASON WORKS
1000 University Avenue
Rochester New York 14692 (US)**

(72) Inventor: **STRITZEL, Gene, A.
130 Cedarwood Terrace
Rochester, NY (US)**

(74) Representative: **Harrison, David Christopher
et al
MEWBURN ELLIS & CO 2/3 Cursitor Street
London EC4A 1BQ (GB)**

(56) References cited:
**US-A-3 901 103
US-A-3 901 103
US-A-3 902 237
US-A-3 905 089
US-A-3 974 717
US-A-4 191 071**

Courier Press, Leamington Spa, England.

# Description

The present invention relates generally to differential mechanisms and in particular to a new differential case for use with a cross axis compound planetary gear differential assembly.

US—A—2859641 to Gleasman discloses a worm gear differential mechanism, termed a "cross-axis compound planetary gear complex". The disclosed differential includes a differential case that mounts gear elements which couple rotation of the differential case to axles extending into the case. In particular, a pair of axle drive gears (also termed traction or side gears) are located within the differential and are received and rotatably coupled with ends of the axles. Pairs of balancing gears are mounted in windows disposed in the case and split driving torque between the side gears. In the embodiment illustrated in this Gleasman patent, the differential case is actually an assembly held together by spacer bolts and other fasteners. In addition, three pairs of balancing gears are employed and hence the differential case assembly includes three windows. Although the differential, disclosed in this Gleasman patent, operates extremely well, it is nevertheless desirable to reduce its manufacturing cost.

Some attempts have been made to reduce the cost of this differential. One such attempt included the substitution of a one piece casting for the individual components that made up the original differential case. Although the cost of producing the differential was reduced by fabricating the differential case from a casting, significant expense was still incurred in machining the raw casting. In particular, each of the three windows required separate machining steps to provide the necessary surface finish to the balancing gear mounting and locating surfaces. In addition, side thrust surfaces for the axle drive gears and/or thrust bearings necessitated the internal machining of the casting to provide the required surface finish. In short, although some cost in producing the differential was saved by the utilization of the cast differential case, the construction of the differential case did not lend itself to high speed production methods.

CA—A—617012 discloses a two-part case for a differential of this type, having opposed transfer gears, wherein positioning surfaces for the transfer gears are provided by further parts, namely reaction plates bolted into the assembly.

A new differential is disclosed in the invention which includes an integral differential case that simplifies the construction and assembly of the differential and significantly reduces its manufacturing cost. The present invention also encompasses a process for making the case and in particular includes a process for finishing the requisite machined surfaces that coact with or locate the gear components in the differential assembly.

According to the invention, the differential case is a unitary casting and comprises end portions disposed on either side of an intermediate portion. The end portions have a laterally extending trunnion with respective coaxial axle-receiving bores through which an axle is inserted to engage internal gear components when supported within the differential case.

The intermediate portion of the differential case defines spaced apart transfer gear windows. Preferably, the common centreline through the windows intersects the axis of rotation for the differential case. Each transfer gear window is defined by a pair of spaced apart, preferably parallel side walls and a pair of spaced apart transverse wall sections that extend between and join with the side walls. In accordance with the invention, each transverse wall section has a broached surface that serves as a locating and reaction surface for transfer gears mounted within the window, and a non-broached surface recessed from the broached surface. In other words, the surface of each transverse wall section may project towards a centre plane of the window, so that the other portions of the transverse wall section are disposed in a plane spaced further from the centre plane than the plane of the machined surfaces.

With the disclosed invention, the amount of finish machining for a transfer gear window is reduced. In the exemplary embodiment, only the locating/reaction surfaces for the transfer gears are actually finish machined; the remainder of the wall sections and side walls defining the window opening are left unmachined.

According to the invention, each end portion includes an annular extension, that extends inwardly into the inside of the differential case. The annular extensions are preferably formed concentric with the axle receiving bores of the respective case end positions. Each extension defines a locating and reaction surface for an axle drive gear or axle drive gear bearings, disposed within the differential. The reaction surface for each extension is defined by a broached end face, the distance between the end faces of the extensions being less than the distance between the side walls of the window openings. When viewed from a window, the extensions appear to project towards the centre line of the windows and are disposed in parallel planes that are orthogonal to the planes of the machined surfaces of the window wall sections. In the preferred method of making the differential case, a broaching tool is inserted through a window opening to finish machine the projecting surfaces of the window wall sections and the end faces of the inner extensions of the case end portions. With this preferred process, broached window surfaces and broached extension end faces for the transfer gears and axle drive gears, respectively, are provided in a single broaching cycle. In addition, the added clearance provided by the unmachined portions of the windows provide chip relief for the broaching process.

According to an optional feature of the invention, the intermediate portion defines additional openings that are positioned substantially 90 degrees from the transfer gear windows. These additional openings provide added access to the interior of the differential wall while at the same time reducing the overall weight of the case.

According to still another optional feature of the invention, the intermediate portion defines recesses between the transfer gear windows and the additional openings, so that in section the intermediate portion appears to be defined by four L-shaped posts. According to this feature, each post defines shaft receiving bores aligned with associated bores on the adjacent L-shaped posts which together support shafts by which transfer gears are rotatably carried within the window. Each post preferably includes a means for retaining the shafts which in the preferred embodiment comprises relatively small diameter bores for receiving a retaining pin or similar arrangement.

The construction of the differential case is disclosed for use with a cross axis compound planetary gear differential of the type described in US—A—2859641, but in which two pairs of balancing gears are used to cross couple the axle drive instead of three pairs as disclosed in that patent. The unitary case reduces assembly time of the differential and even more importantly, the cost of producing the case is substantially less than the cost of producing a differential case comprised of individual components.

Additional features will become apparent and a fuller understanding of the invention will be obtained by reading the following detailed description made in connection with the accompanying drawings, wherein:

Figure 1 is a sectional view of a differential case embodying the present invention as seen from the plane indicated by the line 1—1 in Figure 2;

Figure 2 is an end view of the differential case;

Figure 3 is a side elevational view of the differential case, rotated 90 degrees from the position shown in Figure 1; and,

Figure 4 is a sectional view of the case as seen from the plane indicated by the line 4—4 in Figure 3.

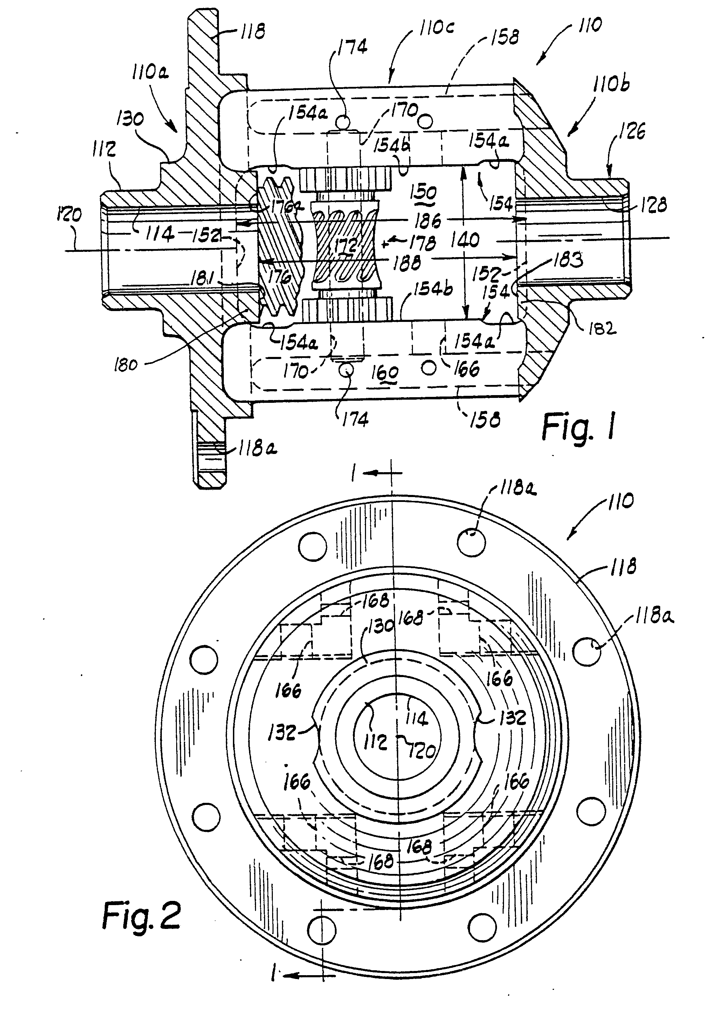

The overall construction of a differential case 110, constructed in accordance with the preferred embodiment of the invention is illustrated in Figures 1—3. The case comprises end portions 110a, 110b disposed on either side of an intermediate portion 110c. The three case portions comprise an integral casting.

The left end portion 110a (as viewed in Figure 1) includes a trunnion 112 formed by a machined annulus which is adapted to receive a bearing by which the trunnion, and hence the differential case, is rotatably mounted to a differential housing. The trunnion 112 defines an internal, axle receiving bore 114 that extends through the trunnion and opens into the interior of the differential case. The end portion 110a also includes a flange 118 including a plurality of apertures 118a by which a ring gear (not shown) is mounted to the differential case.

The right end portion 110b (as viewed in Figure 1) includes a trunnion 126 that also defines, at least partially, an internal axle receiving bore 128 that opens into the interior of the case. The trunnion 126 also comprises a machined annulus adapted to receive a bearing by which the right end of the differential case is rotatably mounted to a differential housing. The trunnions 114, 126 and ring gear flange 118 define an axis of rotation 20 for the differential case. As seen in Figure 2, unmachined portions of the trunnion hub, indicated by the reference character 130 include relief notches 132, spaced 180 degrees apart, to provide access for a bearing removing tool should replacement of a differential bearing be necessary. The end portion 110b includes similar notches or reliefs (not shown).

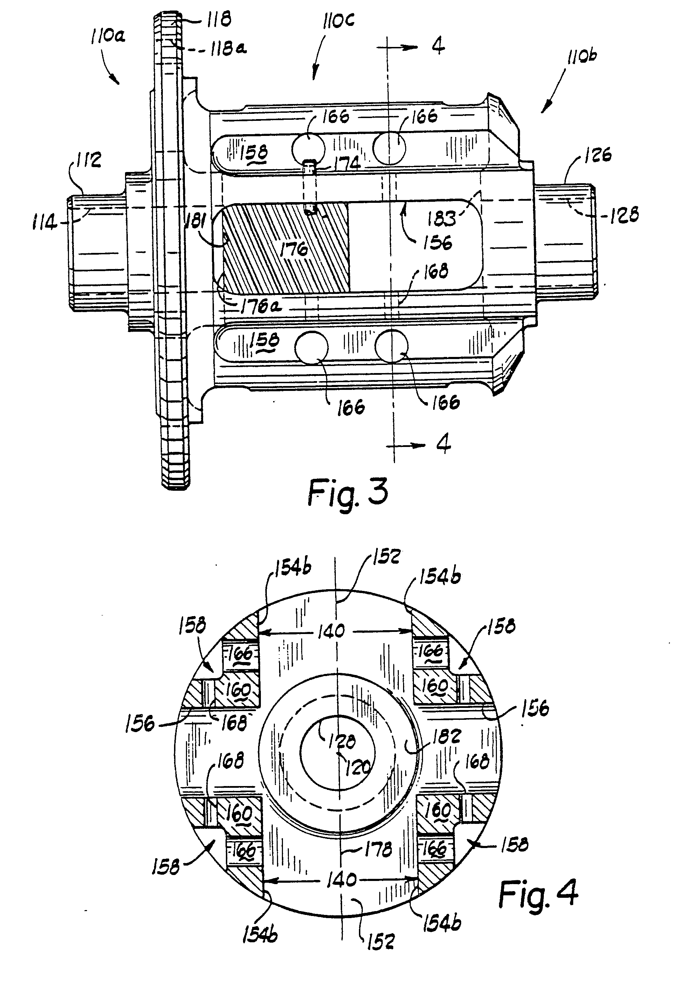

As seen best in Figure 1 and 4, the intermediate portion 110c defines spaced apart, aligned openings, 140 which for purposes of explanation will be termed "windows", in which gear components are located and carried. As seen in Figure 1, the openings appear to define a through-passage 150 extending through the intermediate portion 110c of the differential case.

As viewed in Figure 1, each window is defined by vertical, preferably unmachined, walls 152 and spaced apart, transverse walls 154 which preferably include unmachined portions 154a on either side of a machined portion 154b.

The intermediate portion 110c also includes an additional pair of openings 156 (shown in Figures 3 and 4) which are rotated 90 degrees with respect to the windows 140. The intermediate portion 110c also includes recesses or relieved areas 158 between the windows 140 and the openings 156 so that, in section, and as seen in Figure 4, the intermediate section appears to comprise four L-shaped posts which, for purposes of explanation, shall be individually designated by the reference character 160. Each post defines a pair of parallel, through bores 166 that extend from the recess 158 and open into an associated window 140 and also includes a pair of smaller diameter bores 168 oriented 90 degrees with respect to the bores 166, which extend from the recess 158 to the differential case openings 156. Referring to Figure 1, the bores 166 of the posts 160 are machined or formed in alignment with each other for the purpose of receiving shafts 170 by which transfer gears 172 (only one shaft and one gear are shown) are rotatably carried within the window 140. The smaller diameter bores 168 receive shaft retainers 174, such as friction pins to maintain the transfer gear shafts 170 in position.

Returning to Figures 1 and 4, locating and reaction (thrust receiving) surfaces for axle drive gears 176 (only one gear is shown in Figure 1) are provided by respective annular, inwardly extending extensions 180, 182 of the end portions 110a, 110b. The annular extensions 180, 182 are preferably formed concentric with respective axle receiving bores 114, 128 and as seen in Figure 1, the extensions define machined end faces 181, 183 respectively, which abbuttably engage an outer end face 176a of the side gears 176 or, alternately, the side of a thrust bearing disposed between the side gear 176 and the extension 180 (not shown). As seen best in Figure 1, the transverse dimension of the windows (the distance between the window walls 152), as indicated by the arrow 186, is greater than the distance between the internal end faces 181, 183 of the extensions 180, as indicated by the arrow 188. The machined surface portions 154b of the transverse window wall sections 154 extend inwardly towards a center plane of the window 140, parallel to a window centerline 178 (shown in Figure 4), whereas the extensions 180, 182 project towards the centerline, the end faces being disposed in parallel planes that are orthogonal to the planes of the machined surface portions 154b of the windows.

In the preferred method, the finished surfaces are formed by a broaching process. By appropriate design and construction of a broaching tool the machined portions 154b of the windows walls 154 as well as the end faces 181, 183 of the extensions 180, 182 can be finish machined in one broach cutting cycle. In addition, only those differential case surfaces, requiring a machine finish, are actually contacted by the broach. With the disclosed differential case construction, the amount of material removed during the broaching process is reduced and, in addition, the unmachined portions 154a of the transverse wall sections 154 (as viewed in Figure 1) as well as the additional clearance defined by the added spacing between the vertical wall sections 152, provide chip relief for the broaching process.

As described earlier, one or both windows 140 may be finish machined in a single broaching cycle depending on the broach construction. The use of a broaching process to manufacture the disclosed differential case, results in broached mounting and locating surfaces for the axle drive gears and the transfer gears. In addition, since all surfaces can be concurrently cut with a single tool, critical tolerances between the surfaces can be easily maintained resulting in a precisionally manufactured differential case at a substantially reduced cost as compared to assembled differential cases or cases requiring a multitude of machining steps.

It should be appreciated by those skilled in the art, that the present invention is adaptable to a variety of differential assemblies. The invention has been disclosed in connection with a differential that includes a single pair of transfer gears 172 located in each window 140. The present invention also can be used to produce a differential case for use with a differential that includes additional gearing within the windows such as the differential assembly disclosed in our co-pending application EP—A—0138912.

## Claims

1. An integral differential case (110) for a cross-axis, compound planetary gear differential, comprising:

a) an end portion (110a) defining a first axle-receiving bore (114);

b) another end portion (110b), spaced from said one end portion, including another axle-receiving bore (128) coaxial with the first;

c) an intermediate portion (110c) between the end portions;

d) the intermediate portion including a pair of spaced apart aligned transfer gear windows (140);

e) each transfer gear window (140) being defined by a pair of spaced-apart transverse wall sections (154) which include broached mounting surfaces (154b) projecting towards a centre line (178) of said windows for locating transfer gears, and non-broached recessed surfaces (154a);

f) said end portions (110a, b) including inwardly extending extensions (180, 182) each having a broached end face (181, 183) for defining a locating surface for respective axle drive gears (176) mounted within the intermediate portion, the end faces (181, 183) being in planes normal to the axis of the bores and facing inwardly towards the centre line (178) of the windows beyond side walls (152) also defining the windows, and being arranged so that they may be broached by a tool working through the windows (140).

2. The differential case of claim 1 wherein the intermediate portion (110c) has peripheral elongate openings (156) disposed at substantially 90 degrees from the transfer gear windows (140).

3. The differential case of claim 2 wherein the portion (110c) further defines recesses (158) between the elongate openings (156) and transfer gear windows (140) such that in section, the intermediate portion (110c) appears to comprise four L-shaped posts (160).

4. The differential case of claim 3, wherein each L-shaped post (160) includes at least two bores (166, 168) positioned in alignment with bores (166, 168) in adjacent L-shaped posts for supporting shafts (170) that rotatably carry transfer gears (172) in the windows.

5. The differential case of claim 4 wherein said L-shaped posts (160) include means (174) for retaining the shafts (170) in position.

6. A method of making an integral one-piece differential case (110) having end portions (110a, b) each with one of a pair of coaxial axle-receiving bores (114, 128) and an intermediate portion (110c) with aligned windows (140) for receiving transfer gears (172), a through-opening through the windows being defined by transverse wall sections (154) of the material of the portion (110c) and in planes normal to the axis of the axles by surfaces (181, 183) of projections (180, 182) extending axially inwardly from the end portions (110a, b), which method includes forming surfaces (154b) of the transverse wall sections and the surfaces (181, 183) of the projections by broaching with a broaching tool working through the windows (140), side walls (152) of the windows and part (154a) of the transverse wall sections remaining free of said broaching.

7. A method according to claim 6 wherein all the surfaces are broached in a single broaching cycle.

**Patentansprüche**

1. Einstückiges Differentialgehäuse (110) für ein Querachsen-Verbunddifferentialplanetengetriebe, bestehend aus:

a) einem Endbereich (110a), der eine erste Achsaufnahmebohrung (114) begrenzt;

b) einem anderen Endbereich (110b), der im Abstand von dem einen Endbereich angeordnet ist und eine zu der ersten Achsaufnahmebohrung koaxiale andere Achsaufnahmebohrung (128) aufweist;

c) einem Zwischenbereich (110c) zwischen den Endbereichen;

d) wobei der Zwischenbereich zwei im gegenseitigen Abstand angeordnete fluchtende Übertragungszahnrad-Fenster (140) aufweist;

e) wobei jedes Übertragungszahnrad-Fenster (140) durch zwei im Abstand voneinander angeordnete Querwandabschnitte (154) begrenzt ist, die durch Räumen bearbeitete Flächen (154b) aufweisen, die zu einer Mittellinie (178) der Fenster hin vorspringen, um Übertragungszahnräder zu positionieren, und die unbearbeitete zurückgesetzte Flächen (154a) aufweisen;

f) wobei die Endbereiche (110a, b) nach innen vorspringende Verlängerungen (180, 182) umfassen, die jeweils eine durch Räumen bearbeitete Endfläche (181, 183) aufweisen, um eine Anlagefläche für entsprechende Achs-Antriebszahnräder (176) zu bilden, die im Inneren des Zwischenbereichs gelagert sind, wobei sich die Endflächen (181, 183) in Ebenen normal zur Achse der Bohrungen befinden und nach innen der Mittellinie (178) der Fenster zugekehrt sind, · jenseits von Seitenwänden (152), die auch die Fenster begrenzen, und wobei die Endflächen so angeordnet sind, daß sie durch die Fenster (140) hindurch mit einem Räumwerkzeug bearbeitet werden können.

2. Differentialgehäuse nach Anspruch 1, wobei der Zwischenbereich (110c) am Umfang längliche Öffnungen (156) aufweist, die zu den Übertragungszahnrad-Fenstern (140) im wesentlichen um 90° Grad versetzt sind.

3. Differentialgehäuse nach Anspruch 2, wobei der Bereich (110c) ferner Ausnehmungen (158) zwischen den länglichen Öffnungen (156) und den Übertragungszahnrad-Fenstern (140) begrenzt, so daß der Zwischenbereich (110c) im Querschnitt aus vier L-förmigen Stegen (160) zu bestehen scheint.

4. Differentialgetriebe nach Anspruch 3, wobei jeder L-förmige Steg (160) mindestens zwei Bohrungen (166, 168) aufweist, die mit Bohrungen (166, 168) in benachbarten L-förmigen Stegen fluchten, um Wellen (170) aufzunehmen, auf denen drehbare übertragungszahnräder (172) in den Fenstern drehbar gelagert sind.

5. Differentialgehäuse nach Anspruch 4, wobei die L-förmigen Stege (160) Mittel (174) aufweisen, um die Lage der Wellen (170) festzulegen.

6. Verfahren zur Herstellung eines einteilig einstückigen Differentialgetriebegehäuses (110) mit Endbereichen (110a, b), die jeweils eine von zwei koaxialen Achsaufnahmebohrungen (114, 128) aufweisen, und mit einem Zwischenbereich (110c), der miteinander fluchtende Fenster (140) zur Aufnahme von Übertragungszahnrädern (172) aufweist, wobei eine Durchgangsöffnung durch die Fenster von Querwandabschnitten (154) des Materials des Bereichs (110c) und in Ebenen normal zur Achse der Achsen von Flächen (181, 183) von Vorsprüngen (180, 182) begrenzt ist, die von den Endbereichen (110a, b) axial nach innen vorspringen, wobei das Verfahren die Ausbildung von Oberflächen (154b) der Querwandabschnitte und von Flächen (181, 183) der Vorsprünge umfaßt durch Bearbeitung mit einem Räumwerkzeug durch die Fenster (140) hindurch, wobei Seitenwände (152) der Fenster und ein Teil (154a) der Querwandabschnitte unbearbeitet bleibt.

7. Verfahren nach Anspruch 6, wobei alle Flächen in einem einzigen Räumvorgang bearbeitet werden.

**Revendications**

1. Boîtier de différentiel (110) en une seule pièce pour un différentiel composite à axes croisés à engrenages planétaires comprenant:

a) une partie terminale (110a) définissant un premier alésage (114) recevant un axe;

b) une autre partie terminale (110b) écartée de ladite partie terminale et comprenant un autre alésage (128) recevant un axe et coaxial par rapport au premier;

c) une partie intermédiaire (110c) entre les parties terminales;

d) la partie intermédiaire comprenant une paire de fenêtres (140) alignées et écartées l'une par rapport à l'autre pour les engrenages de transmission;

e) chaque fenêtre pour engrenage de transmission (140) étant définie par une paire de sections de parois transversales (154) écartées l'une de l'autre, qui comprennent des surfaces de montage alésées (154b) orientées vers l'axe (178) des dites fenêtres afin de maintenir en place les engrenages de transmission, et des surfaces en retrait non alésées (154a);

f) lesdites parties terminales (110a, b) comprenant des prolongements (180, 182) dirigés vers l'intérieur et ayant chacun une face terminale alésée (181, 183) définissant une surface de localisation pour les engrenages (176) correspondants d'entraînement de l'axe montés dans la partie intermédiaire, les faces terminales (181, 183) étant dans des plans perpendiculaires à l'axe des alésages et tournées vers l'intérieur et vers l'axe (178) des fenêtres, au-delà des parois latérales (152) et définissant aussi les fenêtres et étant disposées de façon à pouvoir être alésées au moyen d'un alésoir passant à travers les fenêtres (140).

2. Boîtier de différentiel selon la revendication 1, caractérisé en ce que la partie intermédiaire (110c) présente des ouvertures allongées périphériques (156) disposées essentiellement à 90° par rapport aux fenêtres (140) pour les engrenages de transmission.

3. Boîtier de différentiel selon la revendication 2, caractérisé en ce que la partie (110c) définit en outre des redans (158) entre les ouvertures allongées (156) et les fenêtres (140) pour engrenages de transmission, de façon à ce que la partie intermédiaire (110c) se présente en coupe avec quatre montants (160) en forme de "L".

4. Boîtier de différentiel selon la revendication 3, caractérisé en ce que chaque montant en forme de "L" (160) comprend au moins deux alésages (166, 168) alignés par rapport aux alésages (166, 168) dans les montants en forme de "L" voisins, destinés à supporter les arbres (170) sur lesquels sont montés à pivot les engrenages de transmission (172) dans les fenêtres.

5. Boîtier de différentiel selon la revendication 4, caractérisé en ce que lesdits montants en forme de "L" (160) comprennent des dispositifs (174) pour maintenir les arbres (170) en place.

6. Procédé de fabrication d'un boîtier de différentiel en une pièce (110), comportant des parties terminales (110a, b) ayant chacune une paire d'alésages coaxiaux (114, 128) recevant un axe et une partie intermédiaire (110c) avec des fenêtres alignées (140) destinées à recevoir les engrenages de transmission (172), un orifice traversant les fenêtres de part en part étant défini par les sections de parois transversales (154) du matériau de la partie (110c) et dans des plans perpendiculaires à l'axe des arbres, par des surfaces (181, 183) des saillies (180, 182) s'étendant axialement vers l'intérieur depuis les parties terminales (110a, b), ledit procédé comprenant l'usinage des surfaces (154b) des sections de parois transversales et des surfaces (181, 183) des saillies par alésage avec un alésoir traversant les fenêtres (140), les parois latérales (152) des fenêtres et la partie (154a) des sections de parois transversales ne subissant pas ledit alésage.

7. Procédé selon la revendication 6, caractérisé en ce que toutes les surfaces sont alésées au cours d'une seule opération d'alésage.

Fig. I

Fig. 2

Fig. 3

Fig. 4

2